(19) Europäisches Patentamt / European Patent Office / Office européen des brevets

(11) **EP 3 345 165 B1**

(12) **FASCICULE DE BREVET EUROPEEN**

(45) Date de publication et mention de la délivrance du brevet:
**15.12.2021 Bulletin 2021/50**

(21) Numéro de dépôt: **16766243.6**

(22) Date de dépôt: **31.08.2016**

(51) Int Cl.:
*G07C 9/00* (2020.01)    *B60R 25/00* (2013.01)
*G01S 13/82* (2006.01)    *G01S 13/84* (2006.01)

(86) Numéro de dépôt international:
**PCT/EP2016/070546**

(87) Numéro de publication internationale:
**WO 2017/037133 (09.03.2017 Gazette 2017/10)**

(54) **PROCÉDÉ DE DÉTERMINATION D'UNE DISTANCE ENTRE UN VÉHICULE ET UN IDENTIFIANT D'ACCÈS ET DE DÉMARRAGE DU VÉHICULE**

VERFAHREN ZUR BESTIMMUNG EINES ABSTANDS ZWISCHEN EINEM FAHRZEUG UND EINEM FAHRZEUGZUGANG UND ANLASSERIDENTIFIKATOR

METHOD FOR DETERMINING A DISTANCE BETWEEN A VEHICLE AND A VEHICLE ACCESS AND STARTER IDENTIFIER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2015 FR 1558086**

(43) Date de publication de la demande:
**11.07.2018 Bulletin 2018/28**

(73) Titulaire: **Valeo Comfort and Driving Assistance 94046 Créteil Cedex (FR)**

(72) Inventeur: **LECONTE, Eric 94046 Créteil Cedex (FR)**

(74) Mandataire: **Delplanque, Arnaud Valeo Comfort and Driving Assistance 6 rue Daniel Costantini 94000 Créteil (FR)**

(56) Documents cités:
FR-A1- 2 981 026          US-A- 4 804 961
US-A1- 2002 094 786       US-A1- 2003 090 365

**Description**

**DOMAINE TECHNIQUE DE L'INVENTION**

Le domaine technique de l'invention est, d'une façon générale, les systèmes d'accès et de démarrage mains libres de véhicules. L'invention concerne plus particulièrement un procédé de détermination d'une distance séparant un véhicule d'un identifiant mains libres permettant d'accéder au véhicule et/ou de démarrer le véhicule.

**ETAT DE LA TECHNIQUE**

Les systèmes d'accès et de démarrage dit « mains libres » ou « hands free », permettant le verrouillage et le déverrouillage des portes d'un véhicule, ainsi que le démarrage de son moteur sans l'utilisation d'une clef traditionnelle, sont aujourd'hui largement répandus sur le marché.

De manière classique, lorsqu'un utilisateur souhaitant déverrouiller une porte d'un véhicule touche un capteur capacitif ou est détecté par un capteur infrarouge situé au niveau de la poignée de porte, un calculateur central du véhicule déclenche l'émission d'un signal d'interrogation basse fréquence (entre 20 et 150kHz) par une antenne basse fréquence du véhicule. Alternativement, l'antenne basse fréquence peut envoyer périodiquement de tels signaux d'interrogation basse fréquence (on parle de « polling »). Si un identifiant (qui prend classiquement et la forme d'une clef ou d'une carte électronique, voire d'un smartphone disposant d'une application adéquate activée), à proximité du véhicule, capte un signal d'interrogation, il répond en envoyant un code de déverrouillage au calculateur central par signal radio. Un récepteur radio du véhicule réceptionne alors le signal radio : si le code de verrouillage est reconnu par le calculateur central, alors ce dernier commande le déverrouillage de la porte.

Le procédé est sensiblement le même lorsque l'utilisateur souhaite démarrer le véhicule et appuie sur un interrupteur situé dans l'habitacle : dans ce cas, le moteur n'est démarré par le calculateur central que si un code de démarrage envoyé par l'identifiant est reconnu par le calculateur central.

Pour renforcer la sécurité des systèmes d'accès et de démarrage mains libres, il est souhaitable que des conditions additionnelles soient remplies avant de déclencher un verrouillage, un déverrouillage ou un démarrage. Il est notamment souhaitable que la localisation de l'identifiant soit en cohérence avec l'action à effectuer, par exemple :

- Pour un déverrouillage, l'identifiant doit être localisé dans un périmètre maximal, par exemple de 2 mètres, autour du véhicule
- Pour un verrouillage, aucun identifiant ne doit être localisé à l'intérieur de l'habitacle
- Pour un démarrage, l'identifiant doit être localisé à l'intérieur de l'habitacle.

Ainsi, une mesure de distance fiable entre l'identifiant et le véhicule est nécessaire.

Généralement, la distance est calculée à partir d'une mesure de puissance (mesure appelée RSSI pour « Received Signal Strength Indication », en terminologie anglo-saxonne) d'un signal basse fréquence reçu par l'identifiant, par exemple le signal d'interrogation. Utiliser un signal basse fréquence pour mesurer la distance est avantageux. En effet, la distance véhicule-identifiant d'un identifiant à proximité du véhicule est très largement inférieure à la longueur d'onde du signal basse fréquence. Ainsi les phénomènes de réfraction sont limités. De plus, les récepteurs basse fréquence récents consomment très peu en veille.

L'identifiant peut par exemple mesurer la puissance puis transférer la mesure par signal radio au récepteur radio du véhicule, le calculateur central se chargeant alors de mesurer la distance séparant le véhicule de l'identifiant. Alternativement, l'identifiant peut lui-même calculer la distance et ne répondre au signal d'interrogation que si cette distance est inférieure à un seuil prédéterminé (ou bien répondre que la distance calculée ne répond pas à une condition de sécurité).

Toutefois, il est classique que la mesure soit perturbée par des signaux émis par des équipements environnants interférant avec le signal basse fréquence.

US 4 804 961 A divulgue un procédé de mesure de distance de l'art antérieur mesurant la distance entre un ensemble émetteur-récepteur et un transpondeur monté sur différents objets.

**DESCRIPTION GENERALE DE L'INVENTION**

L'objet de l'invention est donc de proposer un procédé de mesure de distance entre un véhicule et un identifiant, qui soit moins sensible aux perturbations des signaux émis par des équipements environnants.

Pour ce faire, l'invention propose un procédé de mesure d'une distance suivant la revendication 1.

L'invention et ses différentes applications seront mieux comprises à la lecture de la description qui suit et à l'examen des figures qui l'accompagnent.

**BREVE DESCRIPTION DES FIGURES**

Les figures ne sont présentées qu'à titre indicatif et nullement limitatif de l'invention. Les figures montrent :

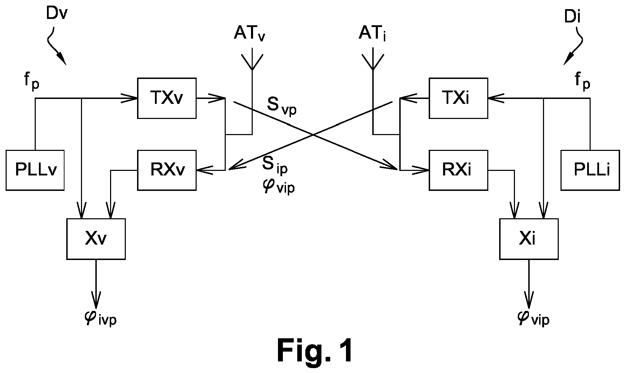

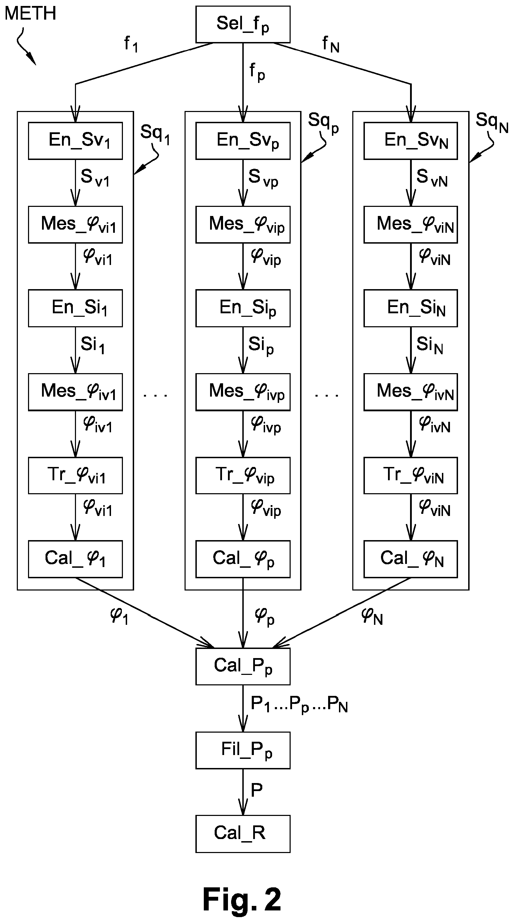

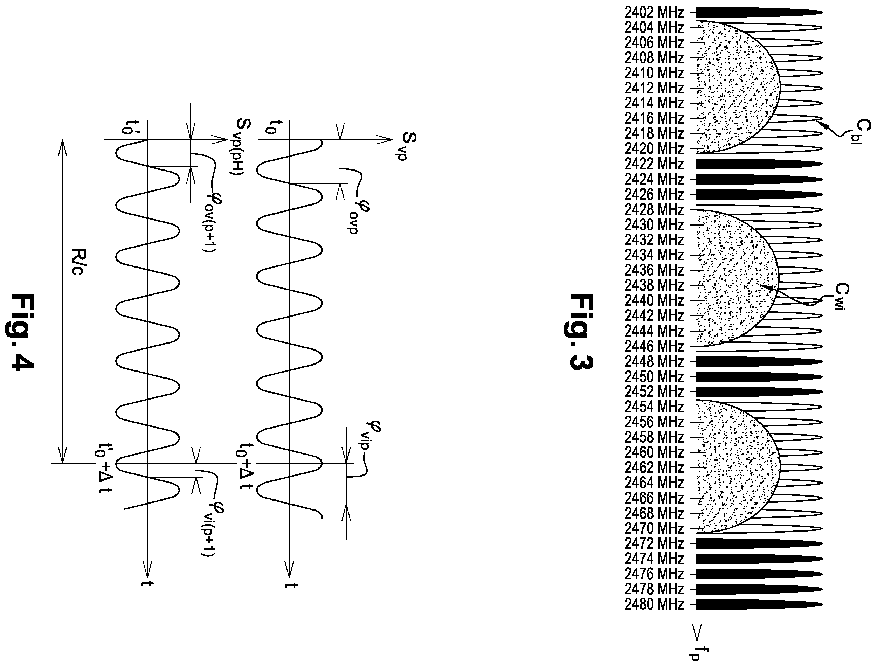

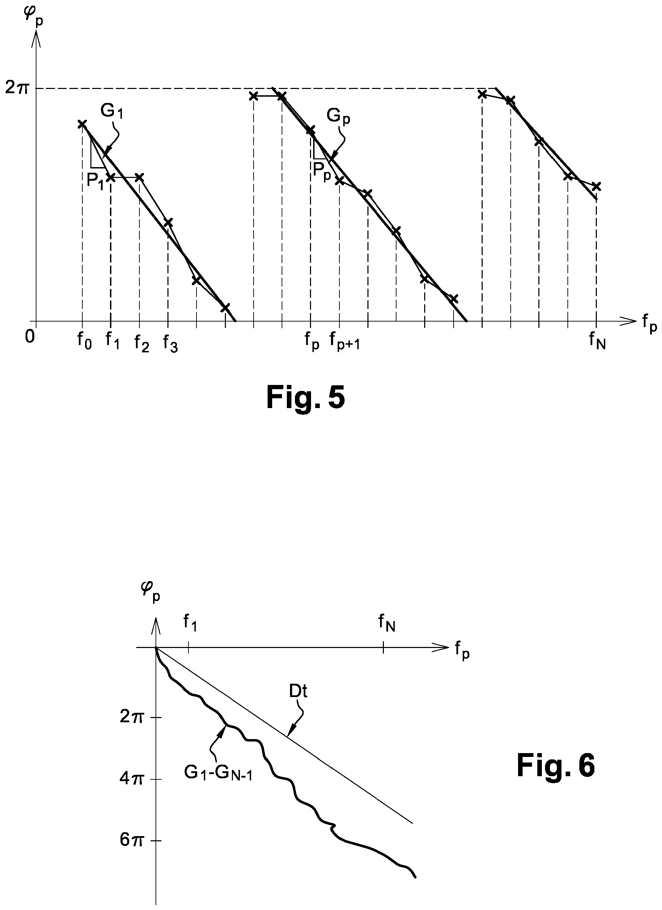

- A la figure 1, deux dispositifs d'émission-réception appartenant respectivement à un véhicule et un identifiant dont on souhaite connaître la distance, les dispositifs étant adaptés à la mise en œuvre d'un procédé selon un mode de réalisation de l'invention ;
- A la figure 2, un diagramme en bloc représentant des étapes du procédé ;
- A la figure 3, une représentation schématique de canaux de communication comprenant des fréquences perturbatrices de la mesure de distance ;
- A la figure 4, des signaux échangés entre les dispositifs d'émission-réception lors d'une étape du procédé ;
- A la figure 5, un graphique représentant des tronçons de phases moyennes, modulo $2\pi$, calculées lors d'étapes du procédé, en fonction de fréquences de signaux échangés lors d'autres étapes du procédé ;
- A la figure 6, un graphique représentant les tronçons de la figure 5, mis bout à bout.

**DESCRIPTION DETAILLEE D'AU MOINS UN MODE DE REALISATION DE L'INVENTION**

Sauf précision contraire, un même élément apparaissant sur des figures différentes présente une référence unique.

Le procédé décrit ci-après permet de calculer une distance R entre un véhicule V et un identifiant I dits mains libres, ledit identifiant I permettant de commander selon un principe « mains libres » l'accès ou le démarrage du véhicule V. L'identifiant I est par exemple une carte ou une clef électronique, ou un smartphone disposant d'une application adaptée.

Le véhicule V comporte un premier dispositif d'émission-réception Dv, et l'identifiant I comporte un deuxième dispositif d'émission-réception Di. Le premier dispositif d'émission-réception Dv et le deuxième dispositif d'émission-réception Di étant similaires, une description générale est présentée ci-après.

En référence à la figure 1, un dispositif d'émission-réception Dz, l'indice z étant indifféremment v ou i, comporte :

- un émetteur TXz de signaux radio (de fréquence au moins égale à 1GHz)
- un récepteur RXz de signaux radio (de fréquence au moins égale à 1GHz)
- une antenne Atz à laquelle sont connectés l'émetteur TXz et le récepteur RXz
- une boucle à verrouillage de phase PLLz pour fournir des signaux de différentes fréquences à l'émetteur TXz et à un calculateur Xv
- le calculateur Xz pour calculer des phases de signaux reçus par le récepteur RXz relativement à des signaux fournis par la boucle à verrouillage de phase PLLz.

On note qu'un smartphone dispose nativement de tous les composants du dispositif d'émission-réception Di décrit. Dans un mode de réalisation préféré, l'identifiant I est donc un smartphone disposant d'une application adaptée à l'accès et au démarrage mains libres du véhicule. Les divers composants du dispositif d'émission-réception Di sont avantageusement déclenchés et contrôlés par l'application installée sur le smartphone.

Le procédé selon l'invention est mis en œuvre par le premier dispositif d'émission-réception Dv et le deuxième dispositif d'émission-réception Di. On note que le premier dispositif d'émission-réception Dv et le deuxième dispositif d'émission-réception Di ont été préalablement synchronisés entre eux, par exemple via un protocole Bluetooth Low Energy (on note que qu'un smartphone dispose nativement d'une puce Bluetooth).

En référence à la figure 2, le procédé METH comporte tout d'abord une sélection de fréquences $p \in [1;N]$, N étant un entier naturel au moins supérieur à 3, éloignées de fréquences perturbatrices classiques. Les fréquences perturbatrices classiques sont par exemple des fréquences Bluetooth ou des fréquences Wi-Fi.

La figure 3 illustre 40 canaux Blutetooth $C_{bl}$ et 3 canaux Wi-Fi $C_{wi}$ situés entre 2401 et 2481 MHz. Les canaux Bluetooth $C_{bl}$ sont de largeur 2 MHz, centrés sur des fréquences paires : le premier canal Bluetooth est centré sur la fréquence 2402 MHz, le dernier est centré sur la fréquence 2480 MHz. Les canaux Wi-Fi sont de largeur 18 MHz. Le canal Wi-Fi de gauche correspond au canal 1, et est centré sur la fréquence 2412 MHz; le canal Wi-Fi du milieu correspond au canal 6, et est centré sur la fréquence 2437 Mz ; le canal Wi-Fi de droite correspond au canal 11, et est centré sur la fréquence 2462 MHz.

Dans un canal, les fréquences centrales sont celles utilisées par le plus d'équipements, tandis que les fréquences extrémales sont moins fréquemment utilisées. Ainsi, dans un mode de réalisation préféré, les fréquences $f_p$ sont sélectionnées parmi des fréquences $F_j$, $j \in [1;K]$, situées :

- aux extrémités des canaux Bluetooth $C_{bl}$, et/ou

- aux extrémités ou hors des canaux Wi-Fi $C_{wi}$.

Les fréquences $F_j$ aux extrémités des canaux Bluetooth $C_{bl}$ sont telles que K=40, F1=2401 MHz et pour tout j compris entre 1 et 39, $F_{j+1}-F_j$=2 MHz. Il s'agit donc des fréquences 2401 MHz, 2403 MHz, etc. Les fréquences $F_j$ aux extrémités ou hors des canaux Wi-Fi $C_{wi}$ sont situées entre 2401 et 2403 MHz, entre 2421 et 2428 MHz, entre 2446 et 2453 MHz, et entre 2471 et 2481 MHz.

Après la sélection de N fréquences $f_p$ aux extrémités des canaux Bluetooth $C_{bl}$, et/ou aux extrémités ou hors des canaux Wi-Fi $C_{wi}$, le procédé METH comporte une succession de N séquences $Sq_p$, chaque séquence $Sq_p$ comprenant les étapes suivantes.

Selon une première étape Em_$S_{vp}$ d'une séquence $Sq_p$, à un temps $t_{0p}$, un premier signal non modulé $S_{vp}$ de phase $\varphi_{0vp}$ et de fréquence $f_p$, préalablement généré par la boucle à verrouillage de phase PLLv du véhicule V, est émis par l'émetteur TXv du véhicule V. Le premier signal $S_{vp}$ est reçu par le récepteur RXi de l'identifiant I à un temps $t_{0p}+\Delta t=t_{0p}+R/c$, où c est la vitesse de propagation du signal et R est la distance séparant le véhicule V de l'identifiant I.

Selon une deuxième étape Mes_$\varphi_{vip}$ d'une séquence $Sq_p$, le calculateur Xi de l'identifiant I mesure la phase $\varphi_{vip}$, modulo $2\pi$, du premier signal $S_{vp}$ reçu, relativement à un deuxième signal $S_{ip}$. Le deuxième signal $S_{ip}$ est un signal généré par la boucle à verrouillage de phase PLLi de l'identifiant I, tel que sa phase vaut $\varphi_{0ip}$ et sa fréquence $f_p$.

La phase $\varphi_{vip}$ mesurée peut être calculée selon la formule suivante :

$$\varphi_{vip} + k*2\pi = \varphi_{0vp} + 2\pi f_p t_{0p} - \varphi_{0ip} - 2\pi f_p(t_{0p}+R/c)$$

k étant un entier naturel positif.

Selon une troisième étape Em_$S_{ip}$ d'une séquence $Sq_p$, à un temps $t_{1p}$, le deuxième signal $S_{ip}$ est émis par l'émetteur TXi de l'identifiant I. Le deuxième signal $S_{ip}$ est reçu par le récepteur RXv du véhicule V à un temps $t_{1p}+\Delta t=t_{1p}+R/c$.

Selon une quatrième étape Mes_$\varphi_{ivp}$ d'une séquence $Sq_p$, le calculateur Xv du véhicule V mesure la phase $\varphi_{ivp}$, modulo $2\pi$, du deuxième signal $S_{ip}$ reçu, relativement au premier signal $S_{vp}$.

La phase $\varphi_{ivp}$ mesurée peut être calculée selon la formule suivante :

$$\varphi_{ivp} + m*2\pi = \varphi_{0ip} + 2\pi f_p t_{1p} - \varphi_{0vp} - 2\pi f_p(t_{1p}+R/c)$$

m étant un entier naturel positif.

Selon une cinquième étape Tr_$\varphi_{vip}$ d'une séquence $Sq_p$, l'émetteur TXi de l'identifiant I transmet au récepteur RXv du véhicule V la phase $\varphi_{vip}$ qu'il a précédemment mesurée.

Selon une sixième étape Cal_$\phi_p$ d'une séquence $Sq_p$, un calculateur du véhicule V calcule la moyenne $\phi_p$ de la phase $\varphi_{ivp}$ (mesurée dans la quatrième étape Mes_$\varphi_{ivp}$) et de la phase $\varphi_{vip}$ (reçue dans la cinquième étape Tr_$\varphi_{vip}$).

La phase moyenne $\phi_p$ est calculée selon la formule suivante :

$$\varphi_p = (\varphi_{0vp} + 2\pi f_p t_{0p} - \varphi_{0ip} - 2\pi f_p t_{0p} - 2\pi f_p R/c + \varphi_{0ip} + 2\pi f_p t_{1p} - \varphi_{0vp} - 2\pi f_p t_{1p} -$$
$$2\pi f_p R/c - k*2\pi - m*2\pi)/2$$
$$= -\{4\pi f_p R/c + (k+m)*2\pi\}/2$$

Les séquences $Sq_p$ pourraient, alternativement, ne pas comprendre la cinquième étape, mais comprendre une étape, entre la quatrième et la sixième étape, de transmission de l'émetteur TXv du véhicule V au récepteur RXi de l'identifiant I, des phases $\varphi_{ivp}$ précédemment mesurées. Ainsi, la sixième étape serait mise en œuvre par le calculateur de l'identifiant I, et non pas par le calculateur du véhicule V.

En référence à la figure 2, le procédé METH comporte également les étapes suivantes, réalisées suite à la mise en œuvre des N séquences $Sq_p$.

Dans une étape Cal_$P_p$, pour chaque p entre 1 et N-1, une pente $P_p$ est calculée par le calculateur Xv du véhicule V par la formule suivante :

$$P_p = (\varphi_{p+1}-\varphi_p)/(f_{p+1}-f_p).$$

On note que :

$$P = [-\{4\pi f_{p+1}R/c + (k+m)*2\pi\}/2 + \{4\pi f_p R/c + (k+m)*2\pi\}/2]/(f_{p+1}-f_p) = -2\pi R/c.$$

Comme le montre la figure 5 qui représente les différentes phases moyennes $\varphi_p$ modulo $2\pi$ (calculées lors des sixièmes étapes Cal_$\varphi_p$ des séquences Sq$_p$) en fonction des différentes fréquences $f_p$, les pentes $P_p$ correspondent à l'inclinaison des segments $G_p$ dont les extrémités sont les points de coordonnées $(f_p ; (\varphi_p)$ et $(f_{p+1} ; \varphi_{p+1})$.

La figure 6 montre les segments $G_1$, ... $G_{N-1}$ de la figure 4 mis bout à bout, ainsi qu'une droite théorique Dt. La droite théorique Dt correspond à un cas idéal dans lequel les premiers signaux $S_{vp}$ et deuxièmes signaux $S_{ip}$ transmis entre le véhicule V et l'identifiant I ne subissent pas de réflexion ou de réfraction : seuls des signaux en trajets directs sont reçus par les récepteurs Rxv, RXi du véhicule V et de l'identifiant I. Dans un cas réel, les signaux reçus par les récepteurs Rxv, RXi du véhicule V et de l'identifiant I ne sont pas exactement les premiers signaux $S_{vp}$ et deuxièmes signaux $S_{ip}$, mais des accumulations des signaux directs et des signaux réfléchis/réfractés.

Se baser sur une seule pente $P_p$ pour calculer la distance R via la formule précédente présente donc un risque d'erreur non négligeable. Ainsi, dans une étape Fil_$P_p$, les N-1 valeurs de pentes $P_p$ calculées subissent un filtrage, pour déterminer une pente optimale P permettant de réaliser le calcul de la distance R. Le filtrage peut par exemple consister en une sélection de la pente minimale parmi les N-1 pentes $P_p$. Le filtrage peut alternativement consister en une sélection de plusieurs pentes parmi les N-1 pentes Pp (par exemple, on ne tient compte que des valeurs jugées incohérentes car trop différentes des pentes calculées avec des fréquences en dehors des canaux Wifi par exemple), puis un moyennage des pentes sélectionnées. Le filtrage peut alternativement consister en un moyennage des N-1 pentes Pp. D'autres types de filtrage sont bien sûr envisageables.

Puis, dans une étape Cal_R, la distance R séparant le véhicule V et l'identifiant I est calculée par le calculateur Xv du véhicule V, selon la formule suivante :

$$R = -c/2\pi*P.$$

A partir de la distance R calculée et en fonction d'une fonction spécifique demandée (ouverture d'une porte, fermeture d'une porte, démarrage du véhicule, par exemple), le calculateur Xv du véhicule V est en mesure de déterminer si la fonction doit être réalisée ou non.

Naturellement, les étapes du procédé pourraient, alternativement, être réalisées dans un autre ordre, techniquement possible, que celui présenté ci-avant.

**Revendications**

1. Procédé (METH) de mesure d'une distance R séparant un véhicule (V) et un identifiant (I) pour accéder et démarrer le véhicule (V), le véhicule (V) et l'identifiant (I) étant synchronisés, le procédé (METH) comprenant :

   - une sélection (Sel_$f_p$) de N fréquences $f_p$, $p \in [1;N]$, N étant un entier naturel au moins supérieur à 3, entre une fréquence minimale $f_{min}$ et une fréquence maximale $f_{max}$, lesdites fréquences $f_p$ étant sélectionnées parmi une pluralité de fréquences $F_j$, $j \in [1;K]$, K étant un entier naturel au moins supérieur à 3, ne se situant pas au centre d'une pluralité de canaux ($C_{bl}$, $C_{wf}$) de communication prédéterminés ;
   - une mise en œuvre de N séquences Sq$_p$, chaque séquence Sq$_p$ comprenant les étapes suivantes :

      • une transmission (Em_$S_{vp}$), d'un émetteur (TXv) du véhicule (V) à un récepteur (Rxi) de l'identifiant (I), d'un premier signal ($S_{vp}$) de fréquence $f_p$
      • une mesure (Mes_$\varphi_{vip}$), par un calculateur (Xi) de l'identifiant (I), d'une phase $\varphi_{vip}$, modulo $2\pi$, du premier signal ($S_{vp}$) reçu, relativement à un deuxième signal ($S_{ip}$) de phase $\varphi_{ip}(t) = \varphi_{0ip} + 2\pi f_p t$
      • une transmission (Em_$S_{ip}$), d'un émetteur (TXi) de l'identifiant (I) à un récepteur (RXv) du véhicule (V), du deuxième signal ($S_{ip}$), ledit deuxième signal ($S_{ip}$) étant généré par une boucle à verrouillage de phase (PLLi) de l'identifiant I, tel que sa phase vaut $\varphi_{0ip}$ et sa fréquence $f_p$
      • une transmission au récepteur (RXv) du véhicule V de la phase $\varphi_{vip}$ qu'il a précédemment mesurée
      • un calcul (Mes_ $\varphi_{ivp}$), par un calculateur (Xv) du véhicule (V), d'une phase $\varphi_{ivp}$, modulo $2\pi$, du deuxième signal ($S_{ip}$) reçu, relativement au premier signal ($S_{vp}$)
      • un calcul (Cal_$\varphi_p$) par un calculateur (Xv) du véhicule (V) de la moyenne $\phi_p$ de la phase $\varphi_{vip}$ et de la phase $\varphi_{ivp}$

- pour chaque p entre 1 et N-1, un calcul (Cal_P$_p$) par un calculateur (Xv) du véhicule (V) d'une pente P$_p$ par la formule P$_p$=($\varphi_{p+1}$-$\varphi_p$)/(f$_{p+1}$-f$_p$)
- un calcul (Cal_R) par un calculateur (Xv) du véhicule (V) de la distance R à partir des pentes P$_p$, p$\in$[1;N],

2. Procédé selon la revendication précédente, **caractérisé en ce que** lesdites N fréquences f$_p$ sont sélectionnées aux extrémités des canaux Bluetooth (C$_{bl}$), et/ou aux extrémités ou hors des canaux Wi-Fi (C$_{wi}$).

3. Procédé (METH) selon l'une des revendications précédentes, **caractérisé en ce que** les fréquences F$_j$ sont des fréquences extrémales de premiers canaux (C$_{bl}$) de la pluralité de canaux de communication prédéterminés.

4. Procédé (METH) selon la revendication précédente, **caractérisé en ce que** les fréquences F$_j$ sont telles que K=40, F1=2401 MHz et pour tout j compris entre 1 et 39, F$_{j+1}$-F$_j$=2 MHz.

5. Procédé (METH) selon l'une des revendications précédentes, **caractérisé en ce que** les fréquences F$_j$ sont situées hors de deuxièmes canaux (C$_{wf}$) de la pluralité de canaux de communication prédéterminés.

6. Procédé (METH) selon l'une des revendications précédentes, **caractérisé en ce que** les deuxièmes canaux (C$_{wf}$) sont des canaux Wi-Fi.

**Patentansprüche**

1. Verfahren (METH) zum Messen eines Abstands R zwischen einem Fahrzeug (V) und einem Identifizierer (I) für den Zugang und das Starten des Fahrzeugs (V), wobei das Fahrzeug (V) und der Identifizierer (I) synchronisiert sind, wobei das Verfahren (METH) Folgendes umfasst:

- eine Auswahl (Sel_f$_p$) von N Frequenzen f$_p$, p$\in$[1;N], wobei N eine natürliche Zahl mindestens größer als 3 ist, zwischen einer Minimalfrequenz f$_{min}$ und einer Maximalfrequenz f$_{max}$, wobei die Frequenzen f$_p$ aus einer Vielzahl von Frequenzen F$_j$,j$\in$[1;K], ausgewählt werden, wobei K eine natürliche Zahl mindestens größer als 3 ist, die nicht in der Mitte einer Vielzahl von vorbestimmten Kommunikationskanälen (C$_{bl}$, C$_{wf}$) liegen;
- eine Durchführung von N Sequenzen Sq$_p$, wobei jede Sequenz Sq$_p$ die folgenden Schritte umfasst:

  • eine Übertragung (Em_S$_{vp}$) eines ersten Signals (S$_{vp}$) mit der Frequenz f$_p$ von einem Sender (TXv) des Fahrzeugs (V) zu einem Empfänger (Rxi) des Identifizierers (I)
  • eine Messung (Mes_$\varphi_{vip}$) einer Phase ($\varphi_{vip}$, Modulo $2\pi$, des empfangenen ersten Signals (S$_{vp}$) relativ zu einem zweiten Signal (S$_{ip}$) mit der Phase $\varphi_{ip}$(t) = $\varphi_{0ip}$ + $2\pi f_p$t durch einen Rechner (Xi) des Identifizierers (I)
  • eine Übertragung (Em_S$_{ip}$) des zweiten Signals (S$_{ip}$) von einem Sender (TXi) des Identifizierers (I) zu einem Empfänger (RXv) des Fahrzeugs (V), wobei das zweite Signal (S$_{ip}$) durch einen Phasenregelkreis (PLLi) des Identifizierers (I) so erzeugt wird, dass seine Phase ($\varphi_{0ip}$ und seine Frequenz f$_p$ ist
  • eine Übertragung der zuvor gemessenen Phase $\varphi_{vip}$ zum Empfänger (RXv) des Fahrzeugs (V)
  • eine Berechnung (Mes_$\varphi_{ivp}$) einer Phase ($\varphi_{ivp}$, Modulo $2\pi$, des empfangenen zweiten Signals (S$_{ip}$) relativ zum ersten Signal (S$_{vp}$) durch einen Rechner (Xv) des Fahrzeugs (V)
  • eine Berechnung (Cal_($\varphi_p$) des Mittelwerts $\varphi_p$ der Phase $\varphi_{vip}$ und der Phase $\varphi_{ivp}$ durch einen Rechner (Xv) des Fahrzeugs (V)

- für jedes p zwischen 1 und N-1 eine Berechnung (Cal_P$_p$) einer Steigung P$_p$ nach der Formel P$_p$ = ($\varphi_{p+1}$ - $\varphi_p$)/(f$_{p+1}$-f$_p$) durch einen Rechner (Xv) des Fahrzeugs (V)
- eine Berechnung (Cal_R) des Abstands R anhand der Steigungen P$_p$, p$\in$[1;N] durch einen Rechner (Xv) des Fahrzeugs (V).

2. Verfahren nach dem vorausgehenden Anspruch, **dadurch gekennzeichnet, dass** die N Frequenzen f$_p$ an den äußersten Enden der Bluetooth-Kanäle (C$_{bl}$) und/oder an den äußersten Enden oder außerhalb der Wi-Fi-Kanäle (C$_{wi}$) ausgewählt werden.

3. Verfahren (METH) nach einem der vorausgehenden Ansprüche, **dadurch gekennzeichnet, dass** die Frequenzen F$_j$ äußerste Endfrequenzen von ersten Kanälen (C$_{bl}$) der Vielzahl von vorbestimmten Kommunikationskanälen sind.

4. Verfahren (METH) nach dem vorausgehenden Anspruch, **dadurch gekennzeichnet, dass** die Frequenzen F$_j$ derart

sind, dass K = 40, F1 = 2401 MHZ und für jedes j zwischen 1 und 39 gilt, dass $F_{j+1} - F_j$ = 2 MHz.

5. Verfahren (METH) nach einem der vorausgehenden Ansprüche, **dadurch gekennzeichnet, dass** die Frequenzen $F_j$ außerhalb von zweiten Kanälen ($C_{wf}$) der Vielzahl von vorbestimmten Kommunikationskanälen sind.

6. Verfahren (METH) nach einem der vorausgehenden Ansprüche, **dadurch gekennzeichnet, dass** die zweiten Kanäle ($C_{wf}$) Wi-Fi-Kanäle sind.

**Claims**

1. Method (METH) for measuring a distance R separating a vehicle (V) and an identifier (I) for accessing and starting the vehicle (V), the vehicle (V) and the identifier (I) being synchronized, the method (METH) comprising:

   - selecting (Sel_$f_p$) N frequencies $f_p$, $p \in [1; N]$, N being a natural number at least greater than 3, between a minimum frequency $f_{min}$ and a maximum frequency $f_{max}$, said frequencies $f_p$ being selected from among a plurality of frequencies $F_j$, $j \in [1;K]$, K being a natural number at least greater than 3, that are not situated at the centre of a plurality of predetermined communication channels ($C_{bl}$, $C_{wf}$);
   - implementing N sequences $Sq_p$, each sequence $Sq_p$ comprising the following steps:

     • transmission (Em_$S_{vp}$), from a transmitter (TXv) of the vehicle (V) to a receiver (Rxi) of the identifier (I), of a first signal ($S_{vp}$) of frequency $f_p$
     • measurement (Mes_$\phi_{vip}$), by a computer (Xi) of the identifier (I), of a phase $\phi_{vip}$, modulo 2n, of the received first signal ($S_{vp}$), in relation to a second signal ($S_{ip}$) of phase $\phi_{ip}(t) = \phi_{0ip} + 2\pi f_p t$
     • transmission (Em_$S_{ip}$), from a transmitter (TXi) of the identifier (I) to a receiver (RXv) of the vehicle (V), of the second signal ($S_{ip}$), said second signal ($S_{ip}$) being generated by a phase-locked loop (PLLi) of the identifier I, such that its phase has the value $\phi_{0ip}$ and its frequency has the value $f_p$
     • transmission, to the receiver (RXv) of the vehicle V, of the phase $\phi_{vip}$ that it measured beforehand
     • calculation (Mes_$\phi_{ivp}$), by a computer (Xv) of the vehicle (V), of a phase $\phi_{ivp}$, modulo 2n, of the received second signal ($S_{ip}$), in relation to the first signal ($S_{vp}$)
     • calculation (Cal_$\phi_p$), by a computer (Xv) of the vehicle (V), of the average $\phi_p$ of the phase $\phi_{vip}$ and of the phase $\phi_{ivp}$

   - for each value of p between 1 and N-1, calculation (Cal_$P_p$), by a computer (Xv) of the vehicle (V), of a gradient $P_p$ using the formula $P_p = (\phi_{p+1} - \phi_p)/(f_{p+1} - f_p)$
   - calculation (Cal_R), by a computer (Xv) of the vehicle (V), of the distance R on the basis of the gradients $P_p$, pe[1;N].

2. Method according to the preceding claim, **characterized in that** said N frequencies $f_p$ are selected at the ends of the Bluetooth channels ($C_{bl}$) and/or at the ends of or outside the Wi-Fi channels ($C_{wi}$).

3. Method (METH) according to either of the preceding claims, **characterized in that** the frequencies $F_j$ are edge frequencies of first channels ($C_{bl}$) of the plurality of predetermined communication channels.

4. Method (METH) according to the preceding claim, **characterized in that** the frequencies $F_j$ are such that K=40, Fl=2401 MHz and, for all values of j between 1 and 39, $F_{j+1} - F_j = 2$ MHz.

5. Method (METH) according to one of the preceding claims, **characterized in that** the frequencies $F_j$ are situated outside of second channels ($C_{wf}$) of the plurality of predetermined communication channels.

6. Method (METH) according to one of the preceding claims, **characterized in that** the second channels ($C_{wf}$) are Wi-Fi channels.

**Fig. 1**

**Fig. 2**

**Fig. 3**

**Fig. 4**

**Fig. 5**

**Fig. 6**

**RÉFÉRENCES CITÉES DANS LA DESCRIPTION**

**Documents brevets cités dans la description**

- US 4804961 A